# EUROPEAN PATENT APPLICATION

(11) **EP 2 045 768 A1**
(43) Date of publication of application: **08.04.2009**
(21) Application number: 07117829.7
(22) Date of filing: 03.10.2007
(51) Int. Cl.: G06Q 20/00, G07F 7/10

(54) **System based on a SIM card for performing services with high security features and relative method**

(71) Applicant: PosteMobile S.p.A., 00144 Rome (IT)
(72) Inventor: Fucci, Francesco, 00181 Rome (IT); Giacchi, Roberto, 00142 Rome (IT)
(74) Representative: Capasso, Olga

(57) **Abstract**

The present invention relates to a method for the secure and rapid performance of banking, economic, financial and postal operations via a mobile telephone terminal and by sending SMS text messages. The invention also relates to a SIM card capable of implementing the method.

## Description

The present invention relates to a method for the secure and rapid performance of banking, economic, financial and postal operations via a mobile telephone terminal and by sending SMS text messages. The invention also relates to a SIM card capable of implementing the method.

The SIM card of the invention is inserted in the mobile terminal and allows communication via the main GSM and UMTS wireless platforms, fully widespread over almost the entire earth's surface.

The method of the invention allows financial, banking and postal services with added value (VAS - value added services) to be performed, hereinafter referred to as distinctive VAS, of which the following list gives non-limiting examples:
- topping up your phone by charging an associated payment tool (e.g. prepaid credit card, post-paid credit card, current account or postal paying-in slip);
- topping up another beneficiary phone by charging a payment tool associated with the applicant (e.g. prepaid credit card, post-paid credit card, current account or postal paying-in slip);
- requesting information on balances and transactions of a payment tool such as a prepaid and post-paid credit card and current account (e.g. postal account and prepaid postal card);
- transfer of money between payment tools (e.g. prepaid credit card, post-paid credit card, current account or postal paying-in slip);
- transfer of credit via a payment tool towards another financial organisation (e.g. another bank, different from that associated with the payment tools);
- payment with postal paying-in slips using a payment tool (e.g. prepaid credit card, post-paid credit card, current account or postal paying-in slip);
- request for postal services charged to a payment tool (e.g. SIM credit, post-paid telephone bill, prepaid credit card, post-paid credit card, current account or postal paying-in slip). Examples of postal services are: telegram, system for tracing deliveries, MMS postcard and SMS ticket;
- micropayments and electronic payments of consumer goods enabled by secure transactions performed via the techniques of encryption of the SIM and in respect of suppliers of partner services and products, charged to the SIM or post-paid telephone bill or other payment tools (e.g. prepaid credit card, post-paid credit card, current account or postal paying-in slip).

Via the SIM card and the method of the invention it is possible to guarantee the five essential security requirements of distinctive VAS, for example a financial transaction:
1. Privacy: guarantee that the content and meaning of the communication are not divulged to unauthorised persons;
2. Integrity: ensure detection by the recipient of any interference with the original message generated by the user;
3. Authentication: ensure that all the parties involved in a communication are recognised with certainty;
4. Authorisation: guarantee that the body requesting performance of an operation is authorised to do so within the specific context;
5. Non-denial: guarantee that, having performed a service, in particular a transaction, neither the recipient nor the user can deny having taken part therein.

The memory of the SIM card is partitioned into reserved areas for memorising applications (plug-in) for security, consisting of an appropriate combination of hashing algorithms, symmetric and asymmetric encryptography algorithms, algorithms for generation and memorisations of encryption keys (on board key generation). In addition to this level of security, aimed at the secure transfer of data, a further degree of security has been obtained for access and authentication at user level via algorithms of management of an order PIN for access to all the financial transactions.

The set and combination of these technical applications, developed directly on the SIM card, allow services with simple and secure access to be performed.

The present invention provides an instrument capable of performing functions which to date had remained specific to banking and/or postal systems.

The method and the SIM card of the invention allow a registered user to perform operations and request banking and financial services comfortably and securely from his or her mobile terminal.

The primary object of the present invention consists in providing a single SIM card which, in addition to the usual functions (phone calls, exchange of messages, WAP surfing) permits banking/financial functions which to date had implied the physical presence of the user in a post office, in a bank or in front of a computer terminal connected to the Internet.

Whoever has a second or third-generation mobile terminal, a telephone subscription with the operator of the SIM and a bank account or another payment tool (current account, credit card, post-paid or prepaid, electronic purse of phone credit associated with the SIM card, etc.) can perform financial operations at any time, in a secure manner and with a few simple steps, by sending encrypted messages.

The system of the invention comprises a SIM card partitioned into 2 reserved areas with a plug-in which allows implementation of the following functions for the management of security: generation of asymmetric keys; creation, modification and ascertainment of PMPIN; encryption; decryption; digital signature. The system allows the secure performance of distinctive VAS such as banking, economic, financial and postal operations through the sending of encrypted SMS text messages.

The object of the present invention is therefore a SIM card having a memory M partitioned into independent areas, one for the manager of the basic telephony services and another for the provider of distinctive VAS. For this purpose the memory of the SIM card is basically partitioned into two areas:
a) a first area dedicated to the network, managed securely also in respect of the mobile telephony operator, occupied by the operating system and by the file system structure, by the system area necessary for voice communication and SMS, by the phone book and by the same SMS text messages;
b) a second area dedicated to the distinctive VAS where the following are housed, as essential components: the plug-in for performance of the security algorithms; the same distinctive added-value services (VAS); a dynamic SIM toolkit (DSTK), which ensures dynamic management of the services portfolio per client and allows the application logic to be moved onto the server component, lightening the weight of the single distinctive applications.

Another object of the invention is a system of communication comprising the SIM card as described above, a provider of distinctive VAS (also supply system) and a certification authority (CA) which provides features of security for the management of the keys and for the identification and certification of the users of the distinctive VAS, integrating the technical features with the unique ones of legal certification of the provider of the distinctive VAS.

A further object of the invention is a method for performing distinctive VAS at a very high security level via communication by plug-in on a SIM card comprising the following phases:
a) initialisation of the encryption system at first access via:
   1. entry of a verification code (PoP) issued during purchase of the SIM card of the invention;
   2. generation of an order PIN code to be associated with every confidential service in respect of the central systems;
   3. generation directly on the SIM card of a pair of asymmetric keys, one private and one public, to be used for the digital signature;
   4. sending of the public key via an encrypted message to the certification authority (CA), in order to create a digital certificate to be filed and used for all subsequent communications;
b) use of the encryption system for the sending of messages relating to the services via:
   1. request for the service by browsing the services menu on the SIM card and entry of the data and information necessary for performance;
   2. entry of the order PIN for authorising the service;
   3. production of a digest of the message via a hash algorithm;
   4. signature of said digest via an asymmetric algorithm;
   5. encryption of the digital signature and of the initial message via an AES algorithm;
   6. sending of the encrypted message via binary SMS text messages and via an OTA communication platform of the service request to the central systems;
   7. decryption of the SMS text message via a call to the CA for validation of the user and of the correctness of the message and subsequent reply from the CA for authorisation for performance of the service.

The pair of asymmetric keys is preferably 1024 bit.

The encrypted message of the public key is preferably in the security standard PKCS#10.

The digest of the message is produced preferably by means of a hash algorithm SHA-1.

The digest is preferably signed by means of an asymmetric algorithm RSA with 1024 bit key.

The digital signature and initial message are preferably encrypted by means of a symmetric key AES algorithm, more preferably 128 bit.

The method advantageously permits flexibility and differentiation of the security level as a function of the service requested, allowing association of the most appropriate security level as a function of the secrecy, confidentiality and financial value.

In fact, in addition to the security criteria used for transmission of the data which enable secure services to be performed, the system has a further security level for access to the services by the user. This is obtained by management on the SIM card of a further specific order PIN code for access to the services (PMPIN), used both to launch the mechanisms of digital signature and encryption of the data and to be able to request and confirm the order operations on the payment tool.

It is therefore possible to set in the safety specifications a single level and a double level: the double level requires entry of the PMPIN twice during some services, for example transactions (request phase and transaction confirmation phase); the single level requires entry of the PMPIN once (confirmation phase).

The present invention will be described by way of non-limiting examples.

### Description of the drawings

Fig. 1 - Diagram of the process of generation of the SIM card.
Fig. 2 - Schematic representation of the mechanism of first access to the distinctive VAS.
Fig. 3 - Diagram of the management of security in communications.
Fig. 4 - Diagram of communication in the micropayment service.
Fig. 5 - Diagram of use of a distinctive VAS.

### Macro processes of generation of the SIM card and activation of services

### 1) Production of the SIM card

The first phase of the process is that of generation of SIM cards on which the following are present:
- a specific symmetric key for each SIM, associated with its ICCID (integrated circuit card ID), a key obtained with an algorithm certified in pseudo-random mode to ensure the impossibility of regenerating the sequence of keys generated;
- a PoP (proof of possession) verification code, used only for the first access, to guarantee that the first user who is to create the PMPIN is the person who has purchased the SIM and who knows the secret initial code received with the packaging of the same SIM.

### 2) Despatch of codes

As mentioned previously, the algorithm for random calculation of the keys is also certified (in accordance with the standard FIPS140). On the basis of the rule, the vendor of the SIM card (SIM vendor) generates a symmetric key for each SIM produced and creates an output file with the ICCID - symmetric key correspondences. The output file contains internally the symmetric keys in an encrypted form (by means of a predefined set of other symmetric keys used exclusively for this purpose) and is sent, via encrypted communication, to the CA for each production batch.

On receipt the CA processes the file and maintains the association within its systems (in turn certified and secure) for all the SIM cards produced in order to use the symmetric keys of the SIM cards during the encryption, decryption and verification of the digital signature of a specific SIM (ICCID), as backing for the supply of the services.

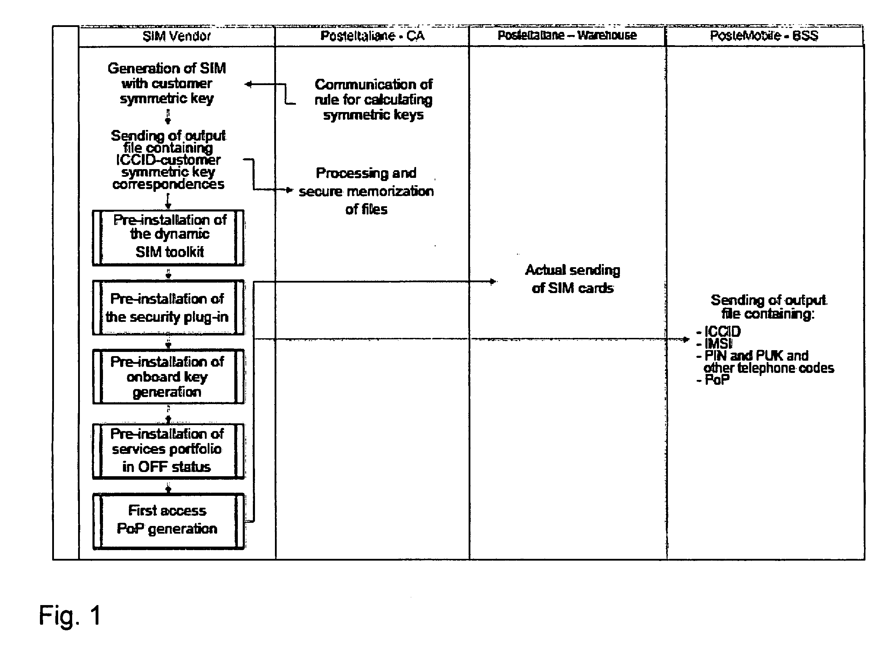

The process of generation of the SIM card is illustrated in Figure 1.

### 3) First access

On network activation of the SIM, the portfolio of the banking and postal services is configured (remote and via OTA) according to the user profile.

On first access to one of these services, the user, after having entered the PoP, is guided during generation of the PMPIN order PIN and the process of generation of the asymmetric keys is then launched via the mechanism on the SIM of OnBoardKeyGeneration (OBKG). The PMPIN will be requested for all the banking and financial services which are to have order functions on the payment tool.

On generation of the PMPIN, the SIM sends the information for the security communications to the back-end systems of the provider of banking and postal services. The security information sent by the application on the SIM is:
- the client public key transferred via the standard PKCS#10
- the specific identifier of the SIM (ICCID).

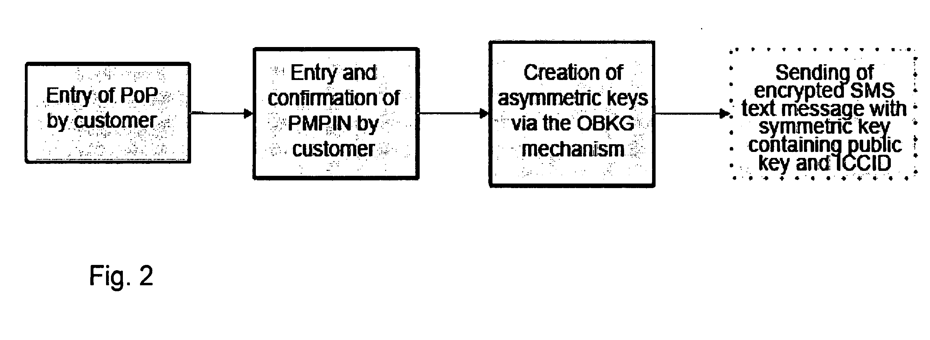

Figure 2 is a schematic representation of what is described.

### 4) Use of the services

Subsequent to creation of the SIM and to activation of the banking and postal services, communication between the terminal and the back-ends of the provider takes place via signed and encrypted SMS text messages.

Before communication the following two successive phases are performed:
1. Electronic signature with private user key following entry of the PMPIN;
2. Encryption of the text with the symmetric encryptography key associated with the user.

In the same way the reply communication between the back-end systems of the provider of the service and the terminal is based on the same mechanism. In this case the encryption of the communication involves encryption of the text with the symmetric key associated with the SIM, guaranteeing that sensitive information on the outcome of the services, in particular transactions, are confidential and accessible solely by the user of the SIM.

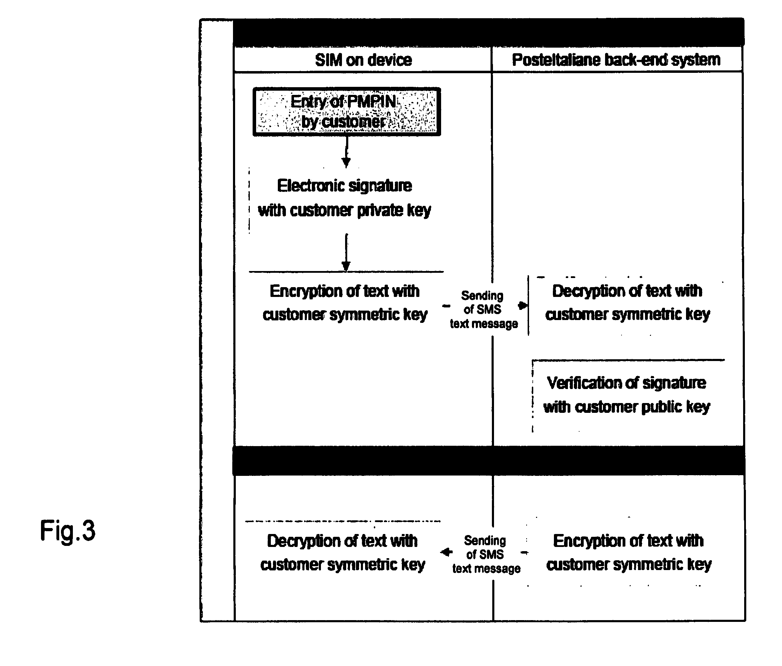

Figure 3 is a schematic representation of the management of the security of the communications.

### Example of use of a distinctive VAS

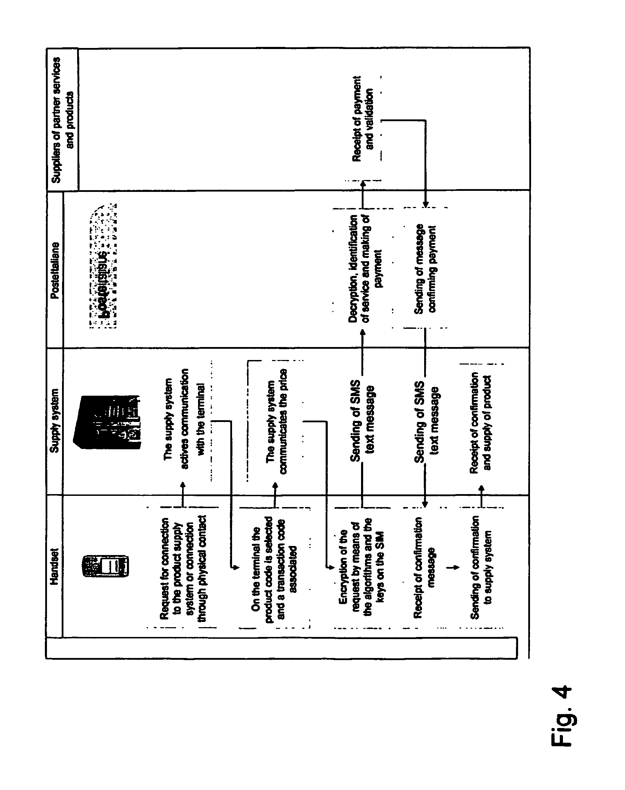

Figure 4 is a diagram of communication in the micropayment service.

It was decided to analyse the service of transfer of money between payment tools (e.g. the Postepay prepaid credit card). The service consists of a transfer of money from the card of a payer to the card of a beneficiary, identified by the mobile telephone number.

The simple steps which the payer has to perform to carry out the operation indicated are the following:
1. select the service by entering the SIM menu;
2. key in the amount to be paid;
3. enter the telephone number of the beneficiary, also obtaining it from the phone book;
4. enter the PMPIN.

The payer and the beneficiary receive a message which indicates the outcome of the operation.

After entry of the PMPIN during confirmation (point 4), the security plug-in algorithms, on the SIM card, are requested which allow the digital signature and encryption of the message.

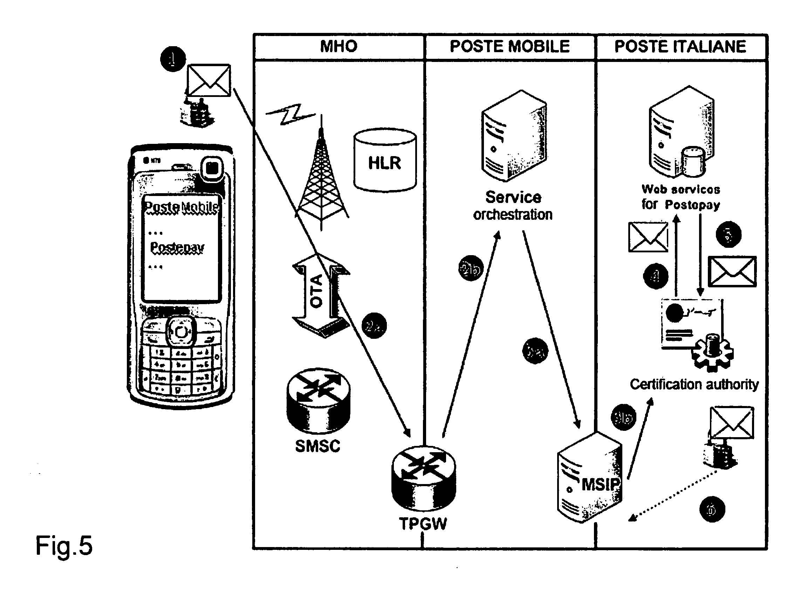

Figure 5 illustrates the process as described below:
1. The message is signed and encrypted following calling-up of the security plug-in on the mobile terminal;
2. the message is sent to the platform of the provider of distinctive VAS (in this example Poste Mobile);
3. the provider of distinctive VAS recognises a request for distinctive service and forwards it to the CA (in this example Poste Italiane) for decryption and verification of the digital signature;
4. subsequently the message is decrypted; once decrypted the message is forwarded to the systems of payment for verification and calculation of the cost of the operation;
5. a confirmation message is returned containing all the information requested;
6. the answer is once again encrypted and returned to the user.

Figure 5 does not show the reverse flow; this flow repeats the stages of the direct flow.

The intent is to underline how communication between the various components of the system remains in any case transparent to the user who simply has to choose the beneficiary, the type of distinctive VAS which he or she wants to use, possibly the sum to be paid, and send the message. As a consequence of these actions the user will receiver on his or her own terminal a confirmation message which contains the code of the operation performed by him or her. In the case of a financial transaction a further message of notification of crediting of the current account is also sent to the beneficiary of the transfer.

## Claims

1. SIM card having a memory M partitioned into independent areas, one for the manager of basic telephony services and another for the provider of distinctive VAS, said areas being basically:
a) a first area dedicated to the network, managed in a secure manner also in respect of the mobile telephony operator and occupied by the operating system and by the structure of the file system, by the system area necessary for voice and SMS communications, by the phone book and by the same SMS text messages;
b) a second area dedicated to the distinctive VAS, which houses, as essential components: the plug-in for performing security algorithms; the same distinctive VAS (value added services); a dynamic SIM toolkit (DSTK), which ensures dynamic management of the services portfolio per client and allows the application logic to be moved onto the server component, lightening the weight of the single distinctive applications.

2. System of communication comprising the SIM card according to claim 1, a provider of distinctive VAS and a certification authority (CA) which provides security features for the management of the keys and for identification and certification of users of the distinctive VAS, integrating the technical features with the unique ones of legal certification of the provider of distinctive VAS.

3. Method for performing distinctive added value services (VAS) with a very high level of security by means of communication by plug-in on a SIM card, comprising the following phases:
a) initialisation of the system of encryption at first access by means of:
i) entry of a verification code (PoP) issued during purchase of the SIM card of the invention;
ii) generation of an order PIN code to be associated with each confidential service in respect of the central systems;
iii) generation directly on the SIM card of a pair of asymmetric keys, one private and one public, to be used for the digital signature;
iv) sending of the public key via an encrypted message to the certification authority (CA) in order to create a digital certificate to be filed and used for all subsequent communications;
b) use of the encryption system for sending messages relating to the services by means of:
i) request for the service by browsing the services menu on the SIM card and entry of data and information required for performance;
ii) entry of the order PIN for authorising the service;
iii) production of a digest of the message by means of a hash algorithm;
iii) signature of said digest by means of an asymmetric algorithm;
iv) encryption of the digital signature and of the initial message by means of an AES algorithm;
v) sending of the encrypted message via binary SMS text messages and by means of the OTA communication platform of the service request to the central systems;
vi) decryption of the SMS text message via a call to the CA for validation of the user and of the correctness of the message and subsequent answer from the CA for authorisation for performance of the service.

4. Method according to claim 3 wherein the pair of asymmetric keys is 1024 bit.

5. Method according to claim 3 or 4 wherein the encrypted message of the public key is in the security standard PKCS#10.

6. Method according to one of claims 3 to 5 wherein the digest of the message is produced by means of a hash algorithm SHA-1.

7. Method according to one of claims 3 to 6 wherein the digest is signed by means of an RSA asymmetric algorithm with 1024 bit key.

8. Method according to one of claims 3 to 7 wherein encryption of the digital signature and of the initial message takes place via a symmetric key AES algorithm.

9. Method according to claim 8 wherein the symmetric key AES algorithm is 128 bit.
